# EUROPEAN PATENT SPECIFICATION

(11) **EP 2 562 283 B1**
(45) Date of publication and mention of the grant of the patent: **05.06.2019**
(21) Application number: 11772054.0
(22) Date of filing: 14.04.2011
(51) Int. Cl.: C22C 38/04, C22C 38/06, C22C 38/02, C22C 38/18, C21D 9/32, C23C 8/80, C21D 1/06, C21D 1/25, C21D 1/28, C23C 8/22, F16H 55/06

(54) **STEEL PART HAVING EXCELLENT IN TEMPER SOFTENING RESISTANCE**
STAHLTEIL MIT HERVORRAGENDER TEMPERERWEICHUNGSBESTÄNDIGKEIT
PIÈCE EN ACIER PRÉSENTANT UNE EXCELLENTE RÉSISTANCE AU RAMOLLISSEMENT

(30) Priority: 19.04.2010 JP 2010095953
(43) Date of publication of application: 27.02.2013
(73) Proprietor: Nippon Steel & Sumitomo Metal Corporation, Tokyo 100-8071 (JP)
(72) Inventor: KOZAWA, Shuji, Tokyo 100-8071 (JP); KUBOTA, Manabu, Tokyo 100-8071 (JP)
(74) Representative: Vossius & Partner Patentanwälte Rechtsanwälte mbB
(86) International application number: PCT/JP2011/059771
(87) International publication number: WO 2011/132722

(56) References cited:
- WO-A1-2009/034970
- JP-A- H 111 749
- JP-A- 5 132 713
- JP-A- 10 259 470
- JP-A- H07 258 793
- JP-A- H08 311 607
- JP-A- 2000 054 069
- JP-A- 2001 032 036
- JP-A- 2003 193 137
- JP-A- 2010 053 429
- JP-A- 2010 053 429
- US-A- 5 518 685
- US-A1- 2010 139 811

## Description

### Technical Field

**0001** The present invention relates to a part made of steel (in particular case hardened steel) such as a pulley or gear for a continuous variable transmission for automobile applications where in the process of use, the temperature in the environment of the part rises and it is necessary to suppress a drop in hardness of the surface of the part.

### Background Art

**0002** For example, pulleys and gears for continuous variable transmissions of automobile applications are usually formed using JIS SCr420, SCM420, or other case hardening use chromium steel or chrome-molybdenum steel which is then gas carburized and tempered for use.

**0003** In recent years, demands for prevention of global warming through the reduction of CO₂ emissions and for conservation of resources have been growing stronger. Reduction of the weight of vehicles is being sought for further improvement of fuel economy. For this reason, unit sizes have to be reduced or the load which can be transmitted has to be increased for the same size of units. In such a case, the load applied to each part becomes greater than in the past, so further higher strength is demanded.
Further, the temperature in the usage environment of the parts rises to about 300°C, so the surface of the parts falls in hardness and pitting fracture occurs. Therefore, to improve the pitting fatigue resistance (improve the surface pressure fatigue strength, increase the surface pressure, etc.), case hardened steel with excellent temper softening resistance is sought.

**0004** As opposed to this, to improve the temper softening resistance, various methods of increasing the content of Si etc. have been proposed. For example, SCr420 steel and SCM420 have an Si content of 0.15 to 0.35%.

**0005** PLT 1 proposes a gear made of steel containing Si: 0.5 to 1.5%, Mn: 0.3 to 1%, and Cr: 0.2 to 0.5% which is carburized, quenched, and tempered to give a content of C of 0.6% or more. However, the inventors evaluated this and as a result found that the content of Cr was small, so a sufficient temper softening resistance could not be obtained.

**0006** PLT 2 proposes a gear comprised of steel containing Si: 1% or less, Mn: 1% or less, and Cr: 1.5 to 5.0% which is carburized, quenched, and tempered to give a content of C of 0.7 to 1.3%.
PLT 3 discloses steel which contains Si: 0.7 to 1.5%, Mn: 0.5 to 1.5%, and Cr: 0.1 to 3.0% and which contains Si+0.2Cr in over 1.3%.

**0007** However, the inventors evaluated these and as result found that the steels described in PLTs 2 and 3 have large contents of Mn and Cr and that if carburization results in the content of C also rising, the amount of residual austenite becomes too great. Therefore, a sufficient temper softening resistance was not necessarily obtained. Further, if Cr exceeds 1.5%, there was the problem that proeutectoid cementite ends up being produced at the stage of holding before quenching after carburization (about 850°C) and the strength ends up deteriorating. Retention before quenching is generally employed for the purpose of reducing the quench distortion.

**0008** PLT 4 discloses steel to which Si: 0.4 to 1.5%, Mn: 0.3 to 2.0%, Cr: 0.5 to 3.0%, and Ti: 0.02 to 0.2% are added. However, the inventors evaluated this and found that a sufficient temper softening resistance was not necessarily obtained. Further, there was a concern over breakage of the gear starting from coarse TiC unavoidably formed to some extent due to the addition of Ti.

**0009** PLT 5 discloses a part comprised of steel containing Si: 0.5 to 1.5%, Mn: 0.2 to 1.5%, and Cr: 0.5 to 1.5% which is carburized, quenched, and tempered to give a content of C of 0.8 to 1.2%, then again heated to the austenite region to thereby cause carbides with an average particle size of 1.2 µm or less to precipitate by an area ratio of 2 to 8% and which is adjusted to a solute carbon content in the matrix of 0.60 to 0.95%. However, the inventors evaluated this and as a result found that the temper softening resistance of the matrix could not necessarily be said to be sufficient.

**0010** PLT 6 proposes a rolling member characterized by comprising steel containing Si: 1.0 to 5.0% into which at least one of Si, Al, Be, Co, P, and Sn is made to diffuse and permeate and treated at the surface layer by carburization, carbonitridation, and/or nitridation, then quenching or quenching and tempering. This does not consider the residual austenite at all. Further, a diffusion permeation step is newly required and leads to deterioration of productivity and increase in production costs.

### Citations List

### Patent Literature

**0011**
PLT 1: Japanese Patent Publication (A) No. 2003-27142
PLT 2: Japanese Patent Publication (A) No. 7-242994
PLT 3: Japanese Patent Publication (A) No. 2003-231943
PLT 4: Japanese Patent Publication (A) No. 2001-329337
PLT 5: Japanese Patent Publication (A) No. 2005-68453
PLT 6: Japanese Patent Publication (A) No. 2004-107709

JP2010053429 discloses a case hardened gear and a method of manufacturing it. The gear is formed with a steel composed (by mass%) of 0.15-0.25% C, 0.50-1.6% Si, 0.3-2% Mn, <=0.02% P, <=0.03% S, 0.5-2% Cr, <=0.1% Al, <=0.03% N and the balance Fe with inevitable impurities, wherein the surface C concentration is >=0.80% by carburizing without generating carbide, and after quenching and tempering, a shot-peening having >=0.5 mmA arc-height value is applied and by this shot-peening, the retained austenite having 10 area% or higher with the ratio present in the surface structure is transferred into a working martensitic structure.

### Summary of Invention

### Technical Problem

**0012** The gears as disclosed in prior art result in insufficient temper softening resistance and the inability to maintain the carburized layer surface hardness at 300 °C and/or the addition of a new production process and have problems of a drop in productivity, new capital investment, etc.
Therefore, the present invention was made to solve this problem and provides a case hardened steel part which is excellent in temper softening resistance. Specifically, the indicator of the pitting fatigue strength (surface pressure fatigue strength of the gear), that is, the "temper softening resistance at 300°C", is defined as the carburized layer surface hardness when performing gas carburization, quenching, and tempering, then again holding at 300°C×2 hours, then tempering. The object is the provision of case hardened steel with a "temper softening resistance" of HV700 or more.

### Solution to Problem

**0013** The inventors engaged in repeated intensive studies for solving the above problems and as a result discovered that to secure a sufficient temper softening resistance at 300°C, it is necessary to satisfy all of the following matter.
(a) The content of Si in the steel be 0.7% or more.
(b) The content of C in the carburized layer be made 0.9 to 1.1% and a hyper eutectic content of C be caused by carburization.
(c) Carbides with an outside diameter of 0.1 µm or more (proeutectoid cementite or spherical carbides) have an area ratio of less than 1%
(d) An amount of residual austenite after carburization, quenching, and tempering be made less than 30%. In other words, the rest of the structure other than residual austenite becomes tempered martensite, so this is synonymous with tempered martensite of 70% or more.

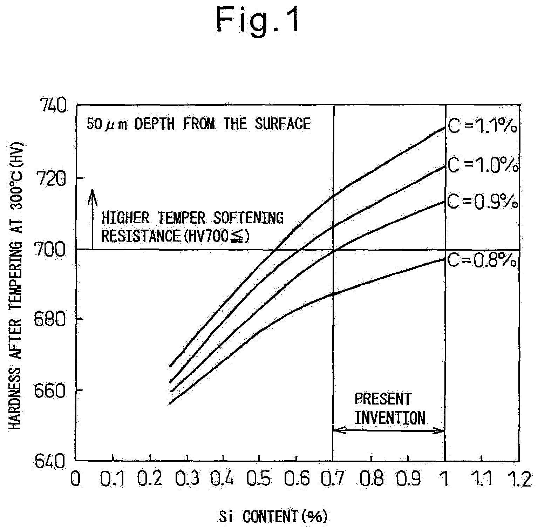

**0015** FIG. 1 shows the effects of the content of Si and the content of C on the hardness after 300°C tempering in the state satisfying the above (b), (c), and (d). As clear from FIG. 1, the inventors clarified that the hardness after 300°C tempering in the hyper eutectic state has a large dependency on the Si content. Normally, carburization is performed to the vicinity of the eutectic point where the content of C is 0.8%.

**0016** The inventors raised the carbon potential of the carburized layer to make the C hyper eutectic. Normally, if raising the carbon potential too much, the drop in the Ms points results in the amount of residual austenite increasing too much and the hardness required as a part becoming unable to be secured any longer. Further, proeutectoid cementite and spherical carbides end up precipitating. These become starting points of fracture and therefore are not good.

**0017** In the present invention, the inventors discovered that by limiting the range of ingredients of various types of alloy elements, it is possible to prevent proeutectoid cementite and spherical carbides from precipitating. The amount of precipitation of fine s carbides of the nanosize order which precipitate in the first stage of tempering of martensite increases by the amount of increase of carbon and the temper softening resistance at 300°C can be maintained. This is the point of the present invention.

**0018** Summarizing this, by using high carbon to prevent the presence of proeutectoid cementite and spherical carbides, it is possible to ensure a greater presence of nanosize order ε carbides in the martensite than usual. Further, by making the material high in Si, even when the ε carbides are tempered from 300°C, transition to cementite becomes difficult. Due to these synergistic effects, the temper softening resistance is greatly improved.
As will be understood from FIG. 1, the inventors learned from experiments that to secure a temper softening resistance of HV700, the carburized layer should have a content of C of 0.9 to 1.1% and a content of Si of 0.7% or more.

**0019** Further, the inventors discovered that to stably cause carburization to the hyper eutectic content of C (0.9 to 1.1%), from the viewpoint of prevention of sooting in the gas carburization, the amount of Si has to be made 1.0% or less. That is, they learned that the suitable range of the content of Si is 0.7% to 1.0%. They learned that range of content of Si is much narrower than the ranges described in the above PLTs.

**0020** Further, the inventors discovered that to use gas carburization to obtain a hyper eutectic content of C (0.9 to 1.1%) and further to prevent the precipitation of proeutectoid cementite even if holding before quenching at about 850°C, the content of Cr has to be made 1.5% or less. However, if the content of C is small, there is the possibility that the temper softening resistance will be made to drop, so at least 1.0% is necessary. Therefore, the suitable range of the Cr content becomes 1.0 to 1.5%. The inventors learned that the range of content of C is much narrower compared with the range described in the above PLTs.

**0021** Still further, the inventors learned that to quench and temper a steel part which is gas carburized to obtain a hyper eutectic content of C (0.9 to 1.1%) and to make the residual austenite amount less than 30%, it is necessary to make the total amount of Mn, Cr, Mo, and Ni 2.5% or less so as to suppress the drop in the Ms point.

**0022** The present invention was made based on the above new discoveries. The gist of the present invention is as follows.
**0023** (1) A steel part excellent in temper softening resistance which is comprised of steel containing as chemical ingredients, by mass%, of
   C: 0.1 to 0.3%,
   Si: 0.7 to 1.0%,
   Mn: 0.2 to 1.5%,
   Cr: 1.0 to 1.5%,
   S: 0.001 to 0.15%,
   Al: 0.001 to 1%, and
   N: 0.001 to 0.03%,
   and optionally containing one or more chemical ingredients, by mass%, of Mo: 0.02 to 0.6%, Ni: 0.1 to 1.0%, B: 0.0002 to 0.005%, Ti: 0.01 to 0.05%, Nb: 0.001% to 0.04%, V: 0.02% to 0.1%, Ca: 0.0002 to 0.005%, Zr: 0.0003 to 0.005%, Mg: 0.0003 to 0.005%, REM: 0.0001 to 0.005%, and having a total content of Mn, Cr, Mo and Ni satisfying 2.5% or less, and
   having a balance of iron and unavoidable impurities, and which is carburized, quenched, and tempered on its surface,
   the steel part characterized by having a content of C at a part at a 50 µm depth from the surface of 0.9 to 1.1%, proeutectoid cementite or spherical
   carbides of an average diameter (average size) of 0.1 µm or more having an area ratio
   of less than 1%, and, further, not containing residual austenite or even if containing it, having an area ratio of less than 30% (or having an area ratio of martensite of 70% or more).
   The area ratio of proeutectoid cementite or spherical carbides of an average diameter of 0.1 µm or more is an area ratio of less than 1% in a part of a depth of 50 µm from the surface in range of 10 µm square on a plane parallel to the surface.
   Further, the area ratio of the residual austenite similarly is an area ratio of less than 30% in a part of a depth of 50 µm from the surface in range of 10 µm square on a plane parallel to the surface. The structure other than the residual austenite is also martensite, so in other words this is synonymous with martensite being present at an area ratio of 70% or more.
   Further, the area ratio can be obtained by photographing the microstructure by a scan type electron microscope at X2000, then analyzing it by an image analysis system.
(5) A pulley for a continuous variable transmission of a belt type excellent in temper softening resistance using the steel part as set forth in any one of the above (1) to (4) .

### Advantageous Effect of Invention

**0024** According to the present invention, case hardened steel of a "temper softening resistance" of HV700 or more is obtained. It is possible to obtain a gear or other part excellent in pitting fatigue resistance at a high temperature. This is a case hardened steel part which is extremely excellent in temper softening resistance. If using a case hardened steel part, it becomes possible to increase the strength of a pulley or gear etc. for a continuous variable transmission for automobile applications and possible to reduce the size of the parts. Due to this, it is possible to lighten the weight of vehicles and therefore improve the fuel economy and reduce the emissions of CO₂ and possible to prevent global warming and conserve on resources. The effect in industry according to the present invention is extremely remarkable.

### Brief Description of Drawings

**0025** FIG. 1 is a view showing the effects of the content of Si and the content of C on the hardness after 300°C tempering.

### Description of Embodiments

**0026** Below, as the mode for working the present invention, a case hardened steel part excellent in temper softening resistance will be explained in detail.

**0027** First, the reasons for limitation of the chemical ingredients of the steel of the present invention will be explained. Below, unless otherwise indicated, mass% in the composition is simply described as "%".

### 0028 C: 0.1 to 0.3%

C is an element which is effective for imparting the necessary strength to steel, but if less than 0.1%, it is not possible to secure the necessary strength, while if over 0.3%, the hardness of the material before machining increases and the machineability deteriorates, so the content must be made 0.1 to 0.3% in range. The suitable range is 0.15 to 0.25%.

### 0029 Si: 0.7 to 1.0%

Si is the most important element in the present invention steel. That is, Si is the most effective element for improving the softening resistance in the 300°C temperature region.
The Ms point of the carburized layer (martensite transformation temperature) falls if the content of C is made high. For this reason, tempering causes an increase in the residual austenite. The inventors learned from FIG. 1 that when making the content of C of the carburized layer the hyper eutectic 0.9 to 1.1%, the suitable range of Si is 0.7% or more.
However, Si is also an element which impairs the carburization ability. From the viewpoint of prevention of sooting in the gas carburization furnace, it was learned by experience that to stably cause a high content of C of the hyper eutectic 0.9 to 1.1%, the amount of Si has to be given an upper limit of 1.0%.

**0030** For the above reasons, the content of Si has to be made 0.7 to 1.0% in range. The suitable range of the lower limit of the content of Si is, from the viewpoint of securing the temper softening resistance, preferably 0.75%, more preferably 0.8%. The upper limit of Si is determined by the sooting limit, so considering a safety margin, 0.98% is preferable and 0.95% is more preferable.

### 0031 Mn: 0.2 to 1.5%

Mn is an element which is effective for deoxidation of the steel and an element which is effective for imparting the necessary strength and quenchability to the steel. If Mn content is less than 0.2%, the effect cannot be sufficiently obtained. Further, if over 1.5%, the effect becomes saturated. Not only that, the hardness of the material before machining increases and the machineability degrades. For this reason, the content has to be made 0.2% to 1.5% in range. The lower limit of the Mn content, from the viewpoint of drawing out the effect and considering a safety margin, is preferably 0.3%, more preferably 0.4%. The upper limit of the Mn content, from the viewpoint of economy due to saturation, is preferably 1.4%, more preferably 1.3%.

**0032** Further, Mn is an element which lowers the Ms point of the steel. In addition, Ni, Cr, Mo, etc. are also elements which lower the Ms point. When such elements promoting a drop in the Ms point are added in a large amount, transformation to martensite is sometimes suppressed and the amount of residual austenite after the gas carburization exceeds 30%. For this reason, it is necessary to limit the total amount of such elements promoting a drop in the Ms point to 2.5% or less. From the viewpoint of suppressing the drop in the Ms point, the amount is preferably 2.3%, more preferably 2.0% or less.

### 0033 Cr: 1.0 to 1.5%

Cr is an element which, upon addition, is effective for imparting strength and quenchability to the steel. To obtain these effects, 1.0% or more is necessary.
However, to prevent precipitation of proeutectoid cementite under carburization conditions giving a hyper eutectic content of C (0.9 to 1.1%) and even if holding before quenching at about 850°C, the amount of Cr has to be made less than 1.5%. For the above reasons, the Cr content has to be made 1.0 to 1.5% in range. The lower limit of the Cr content, from the viewpoint of drawing out the effect and considering a safety margin, is preferably 1.05%, more preferably 1.1%. The upper limit of the Cr content, from the viewpoint of suppressing precipitation of cementite, is preferably 1.4%, more preferably 1.3%.

**0034** In the past, the problem as pointed out that Cr forms oxides together with Si at the surface of a treated object at the time of gas carburization and lowers the carburization ability (for example PLT 1). However, the present invention is characterized by performing gas carburization controlled to a high content of C (0.9 to 1.1%). In this case, the concentration of oxygen in the carburizing atmosphere falls 20 to 50% compared with the general gas carburization targeting a content of C at the surface of the treated object of 0.8% (for example, the concentration of oxygen in the furnace during gas carburization is 1.8×10⁻²⁰ atm at the time of a carbon potential of 0.8, is 1.4×10⁻²⁰ atm at the time of a carbon potential of 0.9, is 1.1×10⁻²⁰ atm at the time of a carbon potential of 1.0, and is 0.9×10⁻²⁰ atm at the time of a carbon potential of 1.1). For this reason, it was confirmed that the trouble of Cr forming oxides is not manifested and the content of Cr was in the range of 1.0 to 1.5%.

### 0035 S: 0.001 to 0.15%

S forms MnS in the steel and is added for the purpose of improving the machineability due to this. If S content is less than 0.001%, the effect is insufficient. On the other hand, if over 0.15%, the effect is saturated and rather grain boundary segregation is caused and grain boundary embrittlement is invited. For the above reasons, the content of S has to be made 0.001 to 0.15% in range. When stressing the machineability, the suitable range is 0.005 to 0.15%, while when stressing the grain boundary strength, the suitable range is 0.001 to 0.030%. When stressing both the machineability and the grain boundary strength, the suitable range is 0.005 to 0.070%.

### 0036 Al: 0.001 to 1%

Al is added for the purpose of deoxidation and improvement of the machineability. If less than 0.001%, the effect of deoxidation is insufficient. Al (all Al in steel) partially bonds with N and precipitates as AlN, while the remainder remains as solute Al. The solute Al effectively acts to improve the machineability, but when stressing the machineability, over 0.05% is necessary, but if over 1%, the transformation characteristics are greatly affected, so the upper limit was made 1.0%. When stressing the machineability, the suitable range is 0.05 to 1%, while when not stressing the machineability that much, the suitable range is 0.02 to 0.05%.

### 0037 N: 0.001 to 0.03%

N is an unavoidably contained element, but also has the effect of refining the crystal grains by formation of compounds with Al and N, so 0.001% or more is required. However, if over 0.03%, the forgeability is remarkably impaired, so 0.03% as made the upper limit. The suitable range is 0.004 to 0.015%. The more suitable range is 0.005 to 0.012%.

### 0038 P: limited to 0.03% or less

P is an unavoidably contained impurity element. It segregates at the grain boundaries to cause a drop in toughness, so has to be limited to 0.03% or less. The suitable range is 0.015% or less. The more suitable range is 0.01% or less.

### 0039 0: limited to 0.005% or less

O is an unavoidably contained impurity element. It is an element which segregates at the grain boundaries to easily cause grain boundary embrittlement and which forms hard oxide-based inclusions in the steel to easily cause embrittlement fracture. O has to be limited to 0.005% or less. The suitable range is 0.0025% or less. The more suitable range is 0.001% or less.

**0040** As explained above, Mn, Cr, Mo, and Ni are all elements which cause the Ms point to drop. The Ms point falls along with an increase in the total content of these elements resulting in a tendency for increase of the residual austenite after carburization, quenching, and tempering. In the present invention, the residual austenite amount has to be made 30% or less. For this reason, the total content of Mn, Cr, Mo, and Ni has to be 2.5% or less. From the viewpoint of suppressing the drop in the Ms point, it is preferably 2.3% or less, more preferably 2.0%. or less.

**0041** Next, in claim 2 of the present invention, there is provided claim 1 in addition to which, to improve the quenchability, one or more of Mo, Ni, and B is included.

### 0042 Mo: 0.02 to 0.6%

Mo, by addition, has the effect of imparting strength and quenchability to the steel, but if less than 0.02%, the effect is insufficient. However, if over 0.6% is added, the effect becomes saturated. Not only that, the hardness of the material before machining increases and the machineability is degraded, so the amount has to be made 0.02% to 0.6% in range. The suitable range has a lower limit of 0.15 and a upper limit of 0.25%. The more preferable range has a lower limit of 0.17 and an upper limit of 0.23%.

### 0043 Ni: 0.1 to 1.0%

Ni, by addition, has the effect of imparting strength and quenchability to the steel, but if less than 0.1%, the effect is insufficient. However, if over 1.0% is added, the effect becomes saturated. Not only that, the hardness of the material before machining increases and the machineability is degraded in accordance with the amount of addition. Therefore, Ni has to be 0.1% to 1.0% in range. The suitable range is 0.2 to less than 0.5%, more preferably a range of 0.2 to 0.3%.

### 0044 B: 0.0002 to 0.005%

B, by addition, has the effect of imparting strength and quenchability to the steel, but to obtain that effect, 0.0002% or more is necessary. However, if adding over 0.005% of B, the effect becomes saturated and conversely deterioration of the impact strength and other detrimental effects are feared, so its content has to be made 0.005% or less in range. The suitable range is 0.0010 to 0.003%, more preferably a range of 0.0015 to 0.0025%.

**0045** Next, in claim 3 of the present invention, there is provided claim 1 or 2 wherein in addition one or more of Ti, Nb, and V is contained for the purpose of refining the crystal grains.

### 0046 Ti: 0.01 to 0.05%

Ti bonds with the C and S in the steel to form fine TiC and TiCS of several nanometers to several tens of nanometers in size and therefore is added to refine the austenite crystal grains at the time of carburization. However, if Ti content is less than 0.01%, the effect is insufficient. However, if adding Ti over 0.05%, due to the loss of C due to TiC, the hardness after 300°C tempering falls, so the upper limit was made 0.05%. The suitable range is 0.015 to 0.04%, more preferably a range of 0.02 to 0.03%.

### 0047 Nb: 0.001 to 0.04%

Nb bonds with the C and N in the steel to form fine Nb(CN) of several nanometers to several tens of nanometers in size and is an element which is effective for suppressing coarsening of the crystal grains, but to obtain that effect, 0.001% or more is necessary. However, if over 0.04% is added, due to the loss of C due to Nb(CN), the hardness after 300°C tempering falls, so the upper limit was made 0.04%. For the above reasons, its content has to be made 0.001% to 0.04% in range. The suitable range is 0.005 to 0.03%, more preferably a range of 0.01 to 0.025%.

### 0048 V: 0.02 to 0.1%

V bonds with the C and N in the steel to form fine V(CN) of several nanometers to several tens of nanometers in size and is an element which is effective for suppressing coarsening of the crystal grains, but to obtain that effect, 0.02% or more is necessary. However, if over 0.1% is added, due to the loss of C due to V(CN), the hardness after 300°C tempering falls, so the upper limit was made 0.1%. For the above reasons, its content has to be made 0.02 to 0.1% in range. The suitable range is 0.03 to 0.08%, more preferably a range of 0.05 to 0.07%.

**0049** Next, in claim 4 of the present invention, there is provided any one of claims 1 to 3 in addition to which, to improve machineability, one or more of Ca, Zr, Mg, and an REM are contained.

### 0050 Ca: 0.0002 to 0.005%

Ca lowers the melting point of the oxides and causes softening due to the rise in temperature under a cutting environment, so improves the machineability, but if less than 0.0002%, there is no such effect, while if over 0.005%, CaS is produced in a large amount and reduces the machineability, so the amount of Ca is preferably made 0.0002 to 0.005%. The suitable range is 0.0005 to 0.004%, more preferably a range of 0.001 to 0.003%.

### 0051 Zr: 0.0003 to 0.005%

Zr is a deoxidizing element. It produces oxides, but also produces sulfides, so is an element having an interrelationship with MnS. It is effective for improvement of the machineability. Zr-based oxides easily form the nuclei for crystallization/precipitation of MnS. For this reason, they are effective for control of dispersion of MnS. As the amount of addition of Zr, to aim for spheroidization of MnS, addition of over 0.003% is preferable, but to cause fine dispersion, conversely addition of 0.0003 to 0.005% is preferable. For the final product, the latter is preferable from the viewpoint of stability of quality in product (yield of ingredients etc.). That is, 0.0003 to 0.005% for causing fine dispersion of MnS is realistically preferable. If 0.0002% or less, the effect of addition of Zr is not recognized much at all. The suitable range is 0.0005 to 0.004%, while a range of 0.001 to 0.003% is more preferable.

### 0052 Mg: 0.0003 to 0.005%

Mg is a deoxidizing element and produces oxides, but also produces sulfides, so is an element having an interrelationship with MnS. It is effective for improvement of the machineability. Mg-based oxides easily form the nuclei for crystallization/precipitation of MnS. Further, the sulfides become composite sulfides of Mn and Mg, whereby deformation is suppressed and the sulfides become spherical. For this reason, this is effective for control of dispersion of MnS, but if less than 0.0003%, there is no such effect, while if over 0.005%, a large amount of MgS is formed and the machineability falls, so the amount of Mg is preferably made 0.0003 to 0.005%. The suitable range is 0.0005 to 0.004%, more preferably a range of 0.001 to 0.003%.

### 0053 REM (rare earth metals): 0.0001 to 0.005%

REM (rare earth metals) is an element which, by addition, has the action of causing fine dispersion of MnS and is effective for improvement of the machineability. To obtain that effect, 0.0001% or more is necessary. However, if over 0.005%, the effect is saturated. The suitable range is 0.0005 to 0.003%. The suitable range is 0.0005 to 0.004%, more preferably a range of 0.001 to 0.003%.

**0054** Next, the limitation of the area ratio of the cementite and carbides inside the carburized layer will be explained. To obtain the temper softening resistance indicator of the carburized layer, that is, the carburized layer surface hardness (Vicker's hardness) at 300°C, it is sufficient to suppress the formation of proeutectoid cementite and spherical carbides and instead cause the precipitation of fine ε carbides on the nanosize order. This is because, due to this, no starting points of fracture are formed and the temper softening resistance at 300°C can be maintained. Therefore, by defining the amounts of proeutectoid cementite and spherical carbides, it is possible to maintain the carburized layer surface hardness.

**0055** The inventors discovered, for the carburized layer surface hardness, it is preferable that proeutectoid cementite and spherical carbides of an average diameter of 0.1 µm or more not be formed at the part of a depth of 50 µm from the carburized layer surface and that even if formed, the ratio of the area (area ratio) be suppressed to less than 1%.

**0056** Further, to secure the strength of the carburized layer, the residual austenite amount should be suppressed and martensite should be formed. For this reason, the inventors discovered that it is preferable that residual austenite not be present at the part of a depth of 50 µm from the carburized layer surface and that even if present, it be suppressed to less than 30%. The reason for limitation in this way is as follows:
**0057** A case hardened steel part which has been gas carburized oxidizes from the surface due to the fine amount of oxygen in a carburization atmosphere (about 10 to 20 atm). At this time, alloys of Si, Mn, Cr, etc. become oxides. Due to the loss from the steel (alloy loss), formation of an incomplete hardened layer of about 20 µm to 40 µm becomes unavoidable. This incomplete hardened layer becomes worn at the extremely initial stage of the time of part use, so in the strength of the part, the properties of the carburized layer directly under it become the dominating factor. As an indicator of the properties of the carburized layer directly under it, the prceutectoid cementite and spherical carbides and the residual austenite amount at the part of 50 µm depth from the surface were defined.

**0058** The present invention uses steel increased in Si to 0.7% or more and makes the content of C 0.9 to 1.1%, preferably over 0.95 to 1.1%, that is, hyper eutectic. At this time, if making the state one in which proeutectoid cementite and spherical carbides are not substantially present and carburizing, quenching, and tempering to give a residual austenite amount of less than 30%, the temper softening resistance is greatly improved. The residual austenite amount should be 0%.

**0059** If the content of C of the carburized layer is less than 0.9%, the hardness after 300°C tempering sometimes cannot satisfy HV700 or more, so the lower limit of the content of C was made 0.9%. If the content of C is over 1.1%, proeutectoid cementite precipitates at the stage of retention before quenching at about 850°C performed after carburization. Therefore, the upper limit of the content of C was made 1.1%. C is present as ε carbides and thereby contributes to the improvement of the temper softening resistance. If C bonds as proeutectoid cementite and spherical carbides, ε carbides are decreased by that amount, so it is preferable to establish a state in which proeutectoid cementite and spherical carbides are not substantially present.

**0060** Here, proeutectoid cementite is cementite which precipitates from austenite before eutectic transformation when cooling hyper eutectic steel from a high temperature and is defined by JIS G 0201. "Spherical carbides" mean carbides which became spherical. Here, it means a size which can be identified by an optical microscope (average diameter found by average value of long diameter and short diameter of particles) of 0.1 µm or more. If proeutectoid cementite and spherical carbides of a diameter of 0.1 µm or more are present in an area ratio of less than 1% (including 0%), a similar effect as the state in which they are not present is obtained.

**0061** The area ratio of proeutectoid cementite and spherical carbides of an average diameter of 0.1 µm or more is an area ratio of less than 1% at a part of a depth of 50 µm from the surface in a range of 10 µm square on a plane parallel to the surface.

**0062** The area ratio can for example by obtained by photographing the microstructure by a scan type electron microscope by a X2000 power, then measuring the area ratio by an image analysis system. The method of measurement of the area ratio is not limited to the above method. The method is not an issue if proeutectoid cementite and spherical carbides can be identified.

**0063** As shown in FIG. 1, the inventors discovered that the hardness after 300°C tempering in the hyper eutectic state is largely dependent on the content of Si. Further, when carburizing the steel by a high content of C of the hyper eutectic state (content of C of 0.9 to 1.1%), the microstructure becomes a dual phase of martensite and residual austenite. Further, by establishing gas carburization conditions reducing the amount of residual austenite of the carburized layer (that is, reducing the amount of martensite), it is possible to increase the presence of ε carbides in the martensite to more than the usual content of C of 0.8%. Further, by making the content of Si high, transition to cementite is difficult even when the ε carbides are quenched at 300°C. Due to these synergistic effects, the temper softening resistance is greatly improved. At this time, the Ms point falls due to the higher C, so it is sufficient to restrict the total content of Mn, Cr, Mo, and Ni to 2.5% or less so that the Ms point does not fall too much.

**0064** Further, the gas carburization method is not particularly limited so long as it is possible to obtain the case hardened steel part of the present invention explained above. However, to stably make the content of C at the part of 50 µm depth from the surface 0.9 to 1.1% in range, it is preferable to secure a carburization time of 30 minutes or more. The oil temperature at the time of quenching after gas carburization may be made either the general hot quenching one such as 130°C or so-called cold quenching one such as 60°C. The inventors compared 130°C oil quenched parts and 60°C quenched parts and discovered that parts oil quenched at 130°C became greater in amount of residual austenite the higher the percentage. However, by suitably setting the quenching conditions, it becomes possible to adjust the amount of residual austenite to less than 30%, so the oil temperature is not limited.

**0065** The gas carburization for auto part applications is generally performed after carburization at a temperature of around 950°C by lowering the temperature to about 850°, holding before quenching, then quenching by oil. However, in part, so-called secondary quenching is performed by quenching by heating to the austenite region of 850°C or more after carburization for the purpose of refining the crystal grains. The content of C in the gas carburization of the present invention is the hyper eutectic state of 0.9 to 1.1%, so unlike the general eutectic C content (0.8%), if heating to the 850°C or higher austenite region again after carburization, there is the problem that spherical carbides precipitate. Therefore, secondary quenching is not recommended. If desiring to perform secondary quenching at all costs, the reheating temperature has to be raised to 900°C or more, preferably 930°C, and the carbides precipitated at the time of reheating have to again be made to form a solid solution in austenite.

**0066** Rather, in the case of case hardened steel according to the present invention, the fact that it is possible to make fine ε carbides precipitate in the martensite structure even without secondary quenching is also a major feature.

**0067** That is, if in the range of ingredients of the present invention, by using carburization conditions at the hyper eutectic state as with general gas carburization, no proeutectoid cementite and spherical carbides is substantially present and the amount of residual austenite can be made less than 30%.

### Examples

**0068** Below, the present invention will be specifically explained by examples. Note that these examples are for explaining the present invention and do not limit the range of the present invention.

**0069** Steel ingots having the chemical ingredients shown in Table 1 were forged, then soaked and normalized, then worked to prepare φ15×45 mm rod shaped test pieces in two types of steel. The rod shaped test pieces were carburized in a conversion type gas carburization furnace (propane conversion) at 930°C×5 hours, then held before quenching at 850°C×30 minutes, then oil quenched at 130°C. Here, the carbon potential with respect to pure iron in the carburization was made 0.9 to 1.2% so as to adjust the content of C in the vicinity of the surface (50 µm depth from the surface) of the test pieces to 0.8 to 1.1%.

**0070** After oil quenching at 130°C, the test pieces were quenched at 150°C×2 hours to obtain test pieces corresponding to actual case hardened steel parts. Here, one test piece out of every two was electrolytically polished to a 50 µm depth from the surface, then measured for amount of residual austenite by a micro X-ray diffraction system.

**0071** Further, a piece was cut from the center part in the axial direction and measured for content of C at the part of a 50 µm depth from the surface by EPMA. Further, the inventors examined the state of presence of carbides under a scan type electron microscope at X2000. If proeutectoid cementite and spherical carbides of an average grain diameter of 0.1 µm or more are present in an area ratio of 1% or more, they are judged "present". A micro Vicker's hardness meter (load 300 gf) was used to measure the hardness at a part of 50 µm depth from the surface. As explained above, the area ratio can be obtained by for example photographing the microstructure by a scan type electron microscope at an X2000 power, then analyzing it by an image analysis system.

**0072** The results of measurement of the amount of residual austenite and the content of C and the results of investigation of the state of presence of the carbides are shown in Table 2. The other of each two test pieces was further tempered at 300°C×2 hours to reproduce the environment of an actual part. After that, a piece was cut from the center part in the axial direction and the part of 50 µm depth from the surface as measured for hardness by a micro Vicker's hardness meter. The measurement results are shown in Table 2.

**0073** As shown in Table 2, Test Nos. 1 to 32 of the invention examples had hardnesses after tempering at 300°C in the vicinity of the surface (50 µm depth from the surface) of HV700 or more and were excellent in temper softening resistance.

**0074** As opposed to this, Test No. 33 of the comparative example had a hardness after tempering at 300°C in the vicinity of the surface (50 µm depth from the surface) of a low HV685. This was because the Si of the steel material was less than 0.7% and consequently the temper softening resistance became insufficient.

**0075** Test No. 34 of the comparative example had a hardness after tempering at 300°C in the vicinity of the surface (50 µm depth from the surface) of a low HV696. This was because the Si of the steel material exceeded 1.0% and consequently the carburization ability fell and because the content of C in the vicinity of the surface (50 µm depth from the surface) was less than 0.9% and therefore the temper softening resistance was insufficient.

**0076** Test No. 35 of the comparative example had a hardness after tempering at 300°C in the vicinity of the surface (50 µm depth from the surface) of a low HV680. This was because the Cr of the steel material was lower than 1.0% and consequently the temper softening resistance was insufficient.

**0077** Test No. 36 of the comparative example had a hardness after tempering at 300°C in the vicinity of the surface (50 µm depth from the surface) of a low HV671. This was because the Cr of the steel material was over 1.5% and consequently, when holding before quenching for 850°Cx30 minutes, proeutectoid cementite formed and the proeutectoid cementite caused a reduction in ε carbides and therefore the temper softening resistance was insufficient.

**0078** Test No. 37 of the comparative example had a hardness after tempering at 300°C in the vicinity of the surface (50 µm depth from the surface) of a low HV675. This was because the total content of Mn, Cr, Mo, and Ni of the steel material exceeded 2.5%, so the amount of residual austenite of the material tempered at 150°C became 30% or more and therefore the temper softening resistance was insufficient.

**0079** Test No. 38 of the comparative example had a hardness after tempering at 300°C in the vicinity of the surface (50 µm depth from the surface) of a low HV671. This was because the total content of Mn and Cr of the steel material exceeded 2.5%, so the amount of residual austenite of the material tempered at 150°C became 30% or more and therefore the temper softening resistance was insufficient.

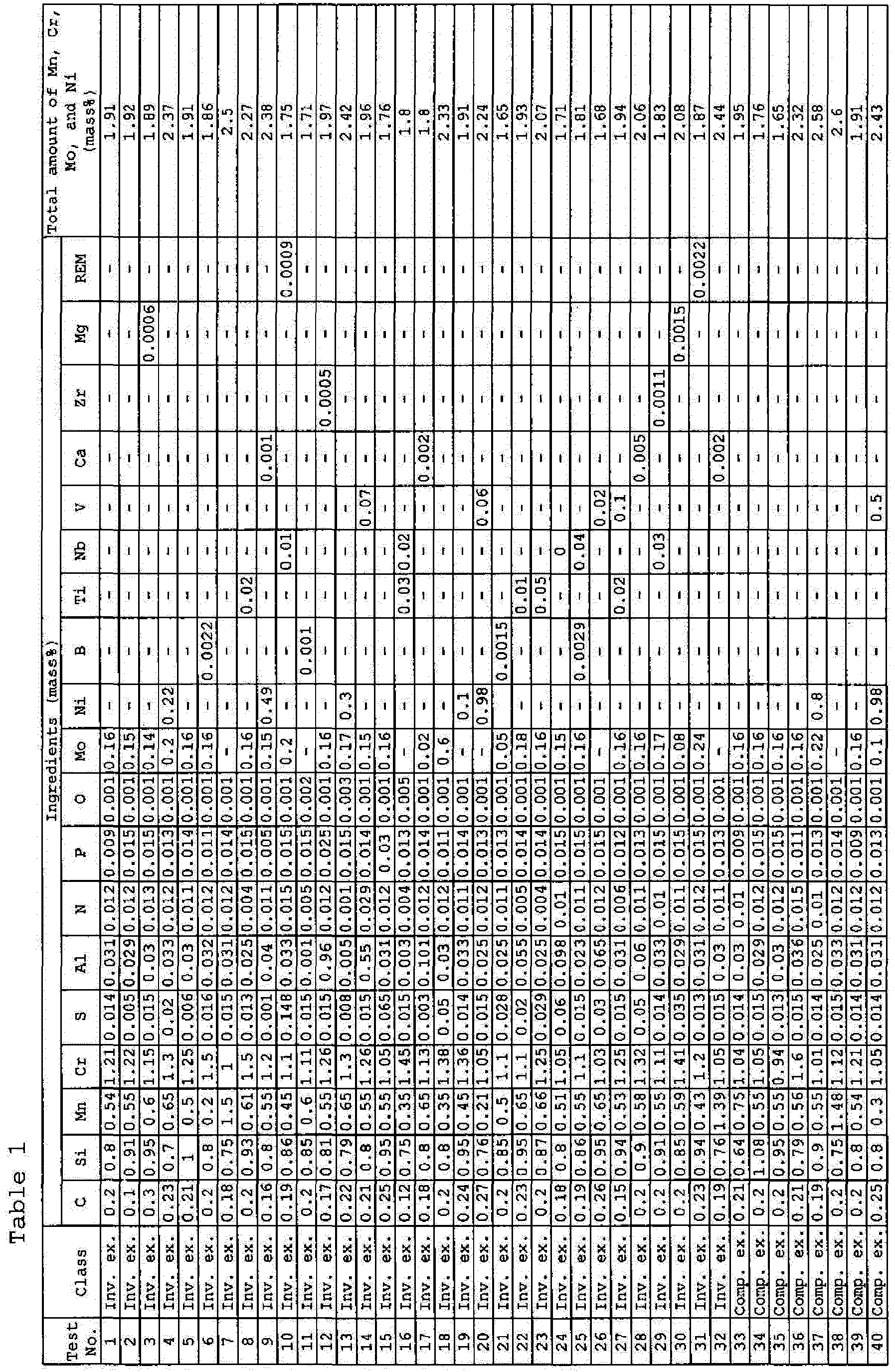

**0081**

**Table 2**

| Test No. | Class | Content of C at 50 µm depth from the surface (mass%) | Presence of outside diameter 0.1 µm or more proeutectoid cementite or spherical carbides (area ratio) | Amount of residual austenite at 50 µm depth from the surface (mass%) | Hardness after tempering at 300°C at 50 µm depth from the surface (HV) |
|---|---|---|---|---|---|
| 1 | Inv. ex. | 0.9 | None | 22 | 704 |
| 2 | Inv. ex. | 1 | None | 24 | 720 |
| 3 | Inv. ex. | 0.9 | None | 15 | 715 |
| 4 | Inv. ex. | 0.9 | None | 19 | 703 |
| 5 | Inv. ex. | 0.9 | None | 16 | 716 |
| 6 | Inv. ex. | 1 | None | 10 | 715 |
| 7 | Inv. ex. | 0.9 | None | 29 | 704 |
| 3 | Inv. ex. | 1 | None | 26 | 722 |
| 9 | Inv. ex. | 1 | None | 20 | 714 |
| 10 | Inv. ex. | 0.9 | None | 14 | 708 |
| 11 | Inv. ex. | 1.1 | None | 24 | 721 |
| 12 | Inv. ex. | 1 | None | 21 | 716 |
| 13 | Inv. ex. | 0.9 | None | 16 | 706 |
| 14 | Inv. ex. | 0.9 | None | 13 | 704 |
| 15 | Inv. ex. | 1 | None | 15 | 720 |
| 16 | Inv. ex. | 1.1 | None | 20 | 718 |
| 17 | Inv. ex. | 1 | None | 22 | 713 |
| 18 | Inv. ex. | 0.9 | None | 14 | 706 |
| 19 | Inv. ex. | 1 | None | 20 | 720 |
| 20 | Inv. ex. | 1.1 | None | 24 | 720 |
| 21 | Inv. ex. | 1 | None | 14 | 718 |
| 22 | Inv. ex. | 1 | None | 20 | 722 |
| 23 | Inv. ex. | 0.9 | None | 10 | 710 |
| 24 | Inv. ex. | 1.1 | None | 14 | 723 |
| 25 | Inv. ex. | 1 | None | 20 | 719 |
| 26 | Inv. ex. | 1.1 | None | 24 | 730 |
| 27 | Inv. ex. | 1 | None | 19 | 722 |
| 28 | Inv. ex. | 0.9 | None | 13 | 711 |
| 29 | Inv. ex. | 1 | None | 20 | 723 |
| 30 | Inv. ex. | 0.9 | None | 24 | 709 |
| 31 | Inv. ex. | 1.1 | None | 24 | 727 |
| 32 | Inv. ex. | 0.9 | None | 26 | 705 |
| 33 | Comp. ex. | 0.9 | None | 17 | 685 |
| 34 | comp. ex. | 0.8 | None | 16 | 696 |
| 35 | Comp. ex. | 1 | None | 24 | 680 |
| 36 | Comp. ex. | 1 | Proeutectoid cementite present (1%) | 25 | 671 |
| 37 | Comp. ex. | 1 | None | 33 | 675 |
| 38 | Comp. ex. | 1 | None | 34 | 671 |
| 39 | Comp. ex. | 1.2 | Proeutectoid cementite present (1%) | 24 | 684 |
| 40 | Comp. ex. | 0.9 | Spherical carbides presence (1%) | 20 | 670 |

### Industrial Applicability

**0082** The case hardened steel part according to the present invention can be utilized for auto parts or machine parts. In particular, when used for auto parts, pulleys, gears, etc. for continuous variable transmissions can be made higher in strength and the parts can be made smaller in size. Due to this, it is possible to achieve a reduction of the weight of the vehicle and consequent improvement of fuel efficiency and reduction of the emission of CO₂ and prevent global warming and conserve resources. The effect in industry of the present invention is extremely remarkable.

## Claims

1. A steel part excellent in temper softening resistance which is comprised of steel containing as chemical ingredients, by mass%, of
C: 0.1 to 0.3%,
Si: 0.7 to 1.0%,
Mn: 0.2 to 1.5%,
Cr: 1.0 to 1.5%,
S: 0.001 to 0.15%,
Al: 0.001 to 1%, and
N: 0.001 to 0.03%; and
optionally containing one or more chemical ingredients, by mass%, of
Mo: 0.02 to 0.6%,
Ni: 0.1 to 1.0%,
B: 0.0002 to 0.005%,
Ti: 0.01 to 0.05%,
Nb: 0.001 to 0.04%,
V: 0.02 to 0.1%,
Ca: 0.0002 to 0.005%,
Zr: 0.0003 to 0.005%,
Mg: 0.0003 to 0.005%, and
REM (rare earth metals): 0.0001 to 0.005%; and
having a total content of Mn, Cr, Mo, and Ni satisfying 2.5% or less, and
having a balance of iron and unavoidable impurities, and
which is carburized, quenched, and tempered on its surface,
said steel part **characterized by** having a content of C at a part at a 50 µm depth from the surface of 0.9 to 1.1%, proeutectoid cementite or spherical carbides of an average diameter of 0.1 µm or more having an area ratio of less than 1%, and, further, not containing residual austenite or even if containing it, having an area ratio of less than 30%.

## Patentansprüche

1. Ein Stahlteil mit hervorragender Temper-Erweichungsfestigkeit, das aus Stahl besteht, welcher als chemische Bestandteile in Massen-% enthält:
C: 0,1 bis 0,3%,
Si: 0,7 bis 1,0%,
Mn: 0,2 bis 1,5%,
Cr: 1,0 bis 1,5%,
S: 0,001 bis 0,15%,
Al: 0,001 bis 1% und
N: 0,001% bis 0,03% und
gegebenenfalls einen oder mehrere chemische Bestandteile, in Massen-% enthält, von
Mo: 0,02 bis 0,6%,
Ni: 0,1 bis 1,0%,
B: 0,0002 bis 0,005%;
Ti: 0,01 bis 0,05%,
Nb: 0,001 bis 0,04%,
V: 0,02 bis 0,1%,
Ca: 0,0002 bis 0,005%,
Zr: 0,0003 bis 0,005%,
Mg: 0,0003 bis 0,005% und
REM (Seltenerdmetalle): 0,0001 bis 0,005% und
einen Gesamtgehalt an Mn, Cr, Mo und Ni aufweist, der 2,5% oder weniger erfüllt und einen Rest aus Eisen und unvermeidbaren Verunreinigungen aufweist und
das an seiner Oberfläche aufgekohlt, gequenched und getempert wird,
wobei das Stahlteil **gekennzeichnet ist durch** einen Gehalt an C bei einem Teil in einer Tiefe von 50 µm von der Oberfläche von 0,9 bis 1,1 %, proeutektoider Zementit oder sphärische Karbide mit einem mittleren Durchmesser von 0,1 µm oder mehr mit einem Flächenverhältnis von weniger als 1 %, und weiterhin nicht enthaltend Restaustenit oder, selbst wenn es diesen enthält, mit einem Flächenverhältnis von weniger als 30 %.

## Revendications

1. Pièce en acier ayant une excellente résistance au ramollissement au revenu, qui est constituée d'un acier contenant comme ingrédients chimiques, en % en masse, du
C : 0,1 à 0,3 %,
Si : 0,7 à 1,0%,
Mn : 0,2 à 1,5 %,
Cr : 1,0 à 1,5 %,
S : 0,001 à 0,15 %,
Al : 0,001 à 1 %, et
N : 0,001 à 0,03 % ; et
contenant éventuellement un ou plusieurs ingrédients chimiques, en % en masse, de
Mo : 0,02 à 0,6 %,
Ni : 0,1 à 1,0 %,
B : 0,0002 à 0,005 %,
Ti : 0,01 à 0,05 %,
Nb : 0,001 à 0,04 %,
V : 0,02 à 0,1 %,
Ca : 0,0002 à 0,005 %,
Zr : 0,0003 à 0,005 %,
Mg : 0,0003 à 0,005 %, et
REM (métaux des terres rares) : 0,0001 à 0,005 % ; et
ayant une teneur totale en Mn, Cr, Mo et Ni de 2,5 % ou moins, et
pour le reste, du fer et des impuretés inévitables, et
qui est carburée, trempée, et revenue sur sa surface,
ladite pièce étant **caractérisée en ce qu'**elle a une teneur en C au niveau d'une partie à une profondeur de 50 µm par rapport à la surface de 0,9 à 1,1 %, de cémentite pro-eutectoïde ou de carbures sphériques ayant un diamètre moyen de 0,1 µm ou plus et ayant un rapport surfacique inférieur à 1 % et, en outre, ne contenant pas d'austénite résiduelle ou même si elle en contient, ayant un rapport surfacique inférieur à 30 %.
